# EUROPEAN PATENT APPLICATION

(11) **EP 1 462 825 A1**
(43) Date of publication of application: **29.09.2004**
(21) Application number: 02806065.5
(22) Date of filing: 19.12.2002
(51) Int. Cl.: G02B 5/02, G02B 5/00, G02F 1/1335

(54) **OPTICAL FILM HAVING CONTROLLED SCATTERING/TRANSMITTING CHARACTERISTICS AND LIQUID CRYSTAL DISPLAY USING IT**

(30) Priority: 28.12.2001 JP 2001399452
(71) Applicant: Clariant International Ltd., 4132 Muttenz (CH)
(72) Inventor: HARADA, Takamasa c/o Clariant(Japan)K. K., Bunkyo, Bunkyo-ku, Tokyo 113-8662 (JP)
(74) Representative: Hütter, Klaus, Dr.
(86) International application number: PCT/JP2002/013324
(87) International publication number: WO 2003/058297

(57) **Abstract**

An optical film 10 has columnar structures which is composed of at least two phases 11, 12 different in refractive index, and in which one phase 12 of larger refractive index extends in the thickness direction of the film, being characterized in that the columnar structures are inclined at an angle of 25 degrees or more to less than 90 degrees to the normal direction of the film. This optical film has a characteristic of elevating in the straight light transmissivity as the incident angle of the light increases in the negative direction from the vertical direction L₁ to L₂ and L₃, and on the other hand, lowering in the straight light transmissivity when the incident angle changes from L₁ to L₄ direction. Therefore, when the optical film is used in a liquid crystal display device or the like, it is possible to display an image excellent in visibility and luminance when observed in the front direction.

## Description

### Technical Field

The present invention relates to an optical film having controlled scattering and transmitting characteristics and a liquid crystal display device using the same.

### Background Art

In a reflective type or transflective type liquid crystal display device, an incident light is generally transmitted through a liquid crystal layer, reflected by a reflective film, and transmitted again through the liquid crystal layer so that a display image gets into eyes of a viewer. At this time by scattering the light by disposing a light scattering film on the surface side of the liquid crystal layer and/or between the liquid crystal layer and the reflective film, the image can be recognized in a wide angle of visual field. This light scattering film is also known as light diffusion film. Representative methods of scattering light by the light scattering film include a method of scattering light by dispersing and containing transparent fine particles in a plastic film or an adhesive and making use of difference in refractive index between the fine particles and the plastic film or the adhesive, and a method of scattering light by roughening the surface of a plastic film.

Other methods are proposed recently, including a method of scattering light by using an overlaid body of a birefringent film in which fine regions different in birefringent characteristic are dispersed and making use of difference in refractive index between the birefringent film and the fine regions (Japanese Patent Application Laid-Open No. 11-174211), and methods of using light scattering films in which fine crystal regions made of same polymer as base polymer are dispersed and distributed, and which shows a different scattering characteristic by difference in refractive index between the fine regions and other portions (Japanese Patent Application Laid-Open Nos. 11-326610, 2000-266936, and 2000-275437).

However, these light scattering films basically scatter light isotropically, and when used in a reflective type liquid crystal display device without a back light, the brightness of the image in the display is low and the visibility is poor.

By contrast, another light scattering film is available, in which a plurality of columnar regions having a higher refractive index in a polymer film in the film thickness direction are formed. This light scattering film is reputed to realize selective viewing angle/diffusion performance depending on the incident angle of the light.

Indeed, by using this diffusion film, a relatively bright image can be obtained at a specific angle of visual field as compared with the light scattering film of isotropic scattering type. However, in a liquid crystal display device possibly used in a place of little incident light such as a cellular phone, in particular, in a liquid crystal display device of reflective type or transflective type, there is an increasing demand for a light scattering film high in luminance in the front at the time of transmission, and capable of focusing the surrounding light efficiently at the time of reflection.

The invention is devised to solve the problems of the prior art. It is hence an object of the invention to present an optical film being higher in visibility, higher in luminance in the front direction at the time of transmission and capable of focusing the surrounding light efficiently at the time of reflection than in the prior art, and excellent in light diffusing and focusing performance, by improving the conventional method of scattering light by dispersing and containing transparent fine particles in the plastic film or the adhesive, or by improving the visibility and light transmitting and focusing performance in the front direction in the light diffusion film obtained by forming a plurality of columnar regions having a higher refractive index in a polymer film in the film thickness direction.

It is also an object of the invention to present a liquid crystal display device excellent in visibility and capable of displaying a brighter image than in the prior art in the front direction, whether in transmission or in reflection, by using the optical film excellent in light focusing performance as the light scattering film.

### Disclosure of the Invention

In order to achieve the objects, an optical film of the invention has the following constitution.
(1) An optical film with light-scattering and light-transmission characteristics which is composed of at least two phases different in refractive index, in which one phase greater in the refractive index has columnar structures extending in the thickness direction of the film, wherein each columnar structure is inclined at an angle of 25 degrees or more to less than 90 degrees with respect to the normal direction of the film.
(2) The optical film according to the item (1), wherein each columnar structure is inclined at an angle of 30 degrees or more to 60 degrees or less with respect to the normal direction of the film.
(3) The optical film according to the item (1) or (2), wherein axial lines of the columnar structures extending in the thickness direction of the optical film are parallel to each other.
(4) The optical film according to any one of the items (1) to (3), wherein a difference in refractive index between at least two phases different in refractive index of the optical film is in a range of 0.005 to 0.2.
(5) The optical film according to any one of the items (1) to (4), wherein the optical film is made of a radiation sensitive material.
   Further, a liquid crystal display device of the invention to achieve the aforementioned object has the following constitution.
(6) A liquid crystal display device, wherein the optical film according to any one of the items (1) to (5) mentioned above is disposed ahead or behind a liquid crystal layer.

### Brief Description of the Drawings

Fig. 1(a) is a schematic sectional view of a light scattering film in which fine particles are dispersed, and Fig. 1(b) is a diagram showing a light scattering characteristic of the light scattering film in Fig. 1(a).
Fig. 2(a) is a schematic sectional view of a light scattering film in which a plurality of circular columns with a high refractive index are formed in a polymer film in the thickness direction of the film, and Fig. 2(b) is a diagram showing a transmissivity characteristic of the light scattering film in Fig. 2(a).
Fig. 3(a) is a schematic perspective view of an optical film of the invention, and Fig. 3(b) is a schematic sectional view taken along the line A-A in Fig. 3(a).
Figs. 4(a) and 4(b) are straight light transmission characteristic diagrams of the optical film in Fig. 3.
Fig. 5 shows a method of measuring the straight light transmission characteristic of the optical film.
Fig. 6 is an explanatory view of an azimuth angle of 0 degree - 180 degrees, an azimuth angle of 90 degrees - 270 degrees, and an elevation angle.
Fig. 7 is a view for explaining a method of exposing a radiation sensitive material.
Fig. 8 is a schematic sectional view of a liquid crystal display device.
Fig. 9 is a schematic sectional view of another liquid crystal display device.
Fig. 10 is an explanatory diagram for explaining light diffusion and transmission characteristics of a laminated film consisting of an optical film and a reflection polarizer.
Fig. 11 shows a laminated film consisting of the optical film of the invention and an isotropic light scattering film.
Fig. 12(a) is a front view and Fig. 12(b) is a partial side view each showing an example of using a light scattering film in a cellular phone.
Fig. 13 is a straight light transmission characteristic diagram of an optical film of the invention having a columnar structure with an inclination angle of 30 degrees.
Fig. 14 is a straight light transmission characteristic diagram of an optical film of a comparative example having a columnar structure with an inclination angle of 20 degrees.
Fig. 15 is a straight light transmission characteristic diagram of an optical film of the invention having a columnar structure with an inclination angle of 40 degrees.
Fig. 16 is a straight light transmission characteristic diagram of an optical film of the invention having a columnar structure with an inclination angle of 60 degrees.

### Detailed Explanation of the Invention

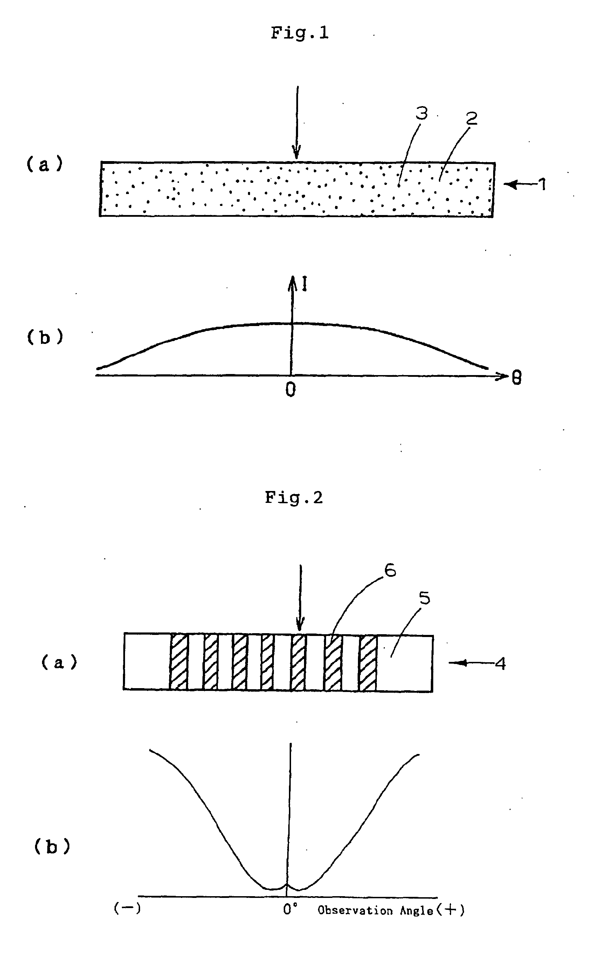

Prior to explanation of the invention, by way of comparison, the light scattering phenomenon in a conventional light scattering film is explained by referring to Fig. 1 and Fig. 2.

Fig. 1(a) is a schematic sectional view of a representative conventional light scattering film, that is, a light scattering film 1 in which transparent fine particles 3 having a different refractive index from that of a plastic film 2 are dispersed in the transparent plastic film. Fig. 1(b) shows a light scattering characteristic of the light scattering film 1 shown in Fig. 1(a). As clear from Fig. 1(b), the light scattering film 1 in which the transparent fine particles 3 are dispersed scatters broadly the light on the whole, and the scatter distribution varies moderately in all angles. Accordingly, when a screen of a liquid crystal display is observed from any direction, only a uniformly dark screen can be seen.

Fig. 2(a) is a schematic sectional view of another conventionally known light scattering film 4 having a structure that multiple columnar structures 6, which is a higher refractive index regions having cylinder shape, are formed in a polymer film 5 in the thickness direction of the film. When the light enters such film, the light perpendicular to the film is scattered. When the incident angle to the light scattering film 4 becomes larger so that the light enters at an angle inclined to the axial line of the column, the light gradually loses its scattering performance. Then, the light entering at an angle of, for example, 45 degrees to 60 degrees with respect to the film surface is hardly scattered and passes through directly.

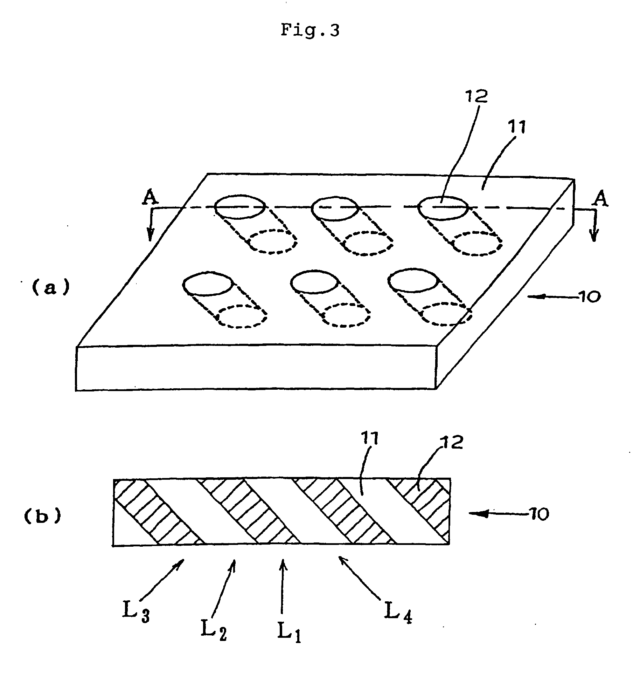

On the other hand, Fig. 3(a) is a schematic perspective view of an optical film 10 of the invention, and Fig. 3(b) is a schematic sectional view taken along the line A-A in Fig. 3(a). In the drawings, reference numeral 11 is a polymer film, and 12 is a columnar structure having a higher refractive index than the polymer film 11. In the invention, the columnar structure 12 may be inclined at an angle of 25 degrees or more to less than 90 degrees to the normal direction of the film, and the inclination is 50 degrees in the illustrated example.

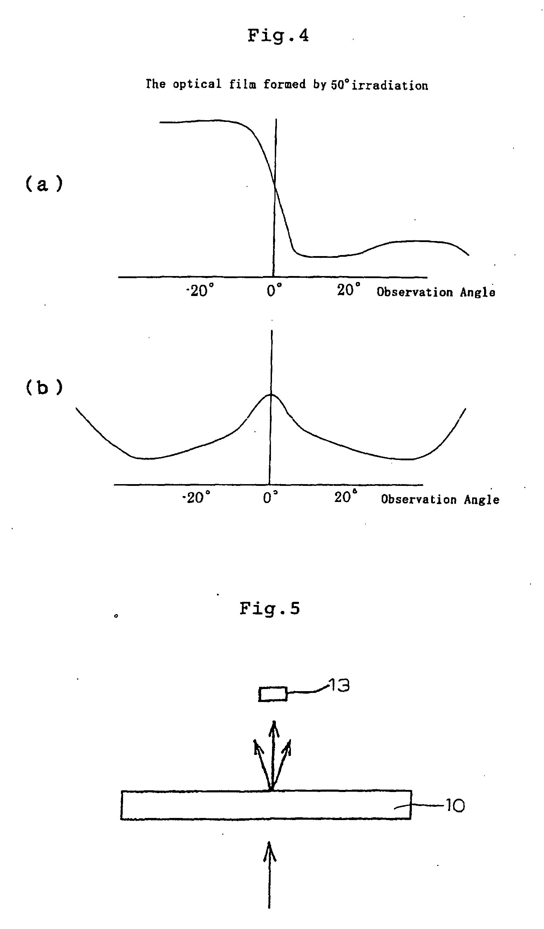

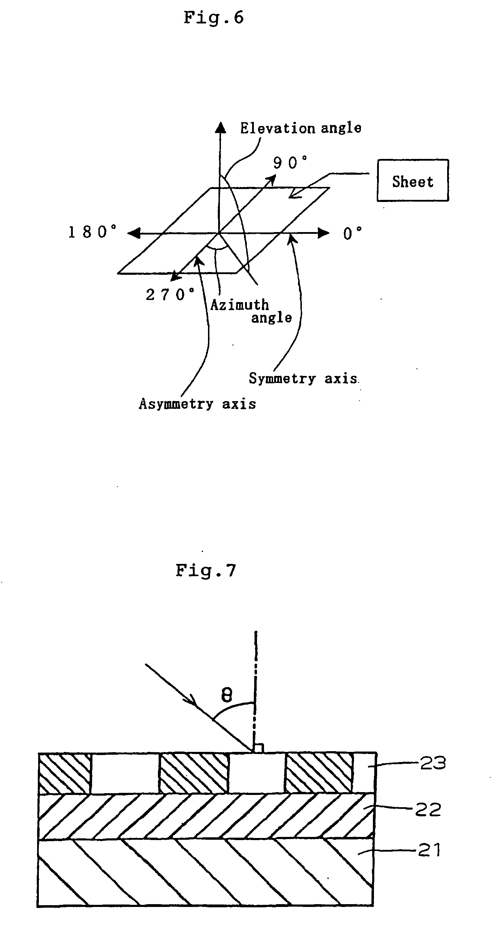

Figs. 4(a) and 4(b) show an angle dependence characteristic of straight light transmissivity of the optical film 10. The angle dependence of straight light transmissivity of the optical film was determined, as shown in Fig. 5, by entering a straight light from one side of the optical film 10, disposing a photo detector 13 at an opposite side of the film in the incident light direction, varying the relative angle of the incident light and film by, for example, rotating the optical film 10, and measuring the intensity of the transmission light by the photo detector 13. In Fig. 4(a), with respect to an azimuth angle of 0 degree - 180 degrees axis (symmetrical axis: line A-A in Fig. 3(a)), the elevation angle is varied from 0 degree to 180 degrees (that is, 0 degree to 180 degrees along the section A-A). On the other hand, in Fig. 4(b), with respect to an azimuth angle of 90 degrees - 270 degrees axis (asymmetrical axis: at the right angle to the line A-A in Fig. 3(a)), the elevation angle is varied from 0 degree to 180 degrees, and the straight light transmissivity at each time is measured. The relation of an azimuth angle of 0 degree - 180 degrees axis, an azimuth angle of 90 degrees - 270 degrees axis, and the elevation angle is as shown in Fig. 6.

With reference to Fig. 3(b), for example, Fig. 4(a) is noticed showing the straight light transmissivity of the light entering along the section A-A of the optical film 10. Light L₁ entering the film surface vertically (zero degree of incident angle) shows some transmissivity. As the angle becomes larger in the negative direction from L₂ to L₃, the light transmissivity is becomes higher, and when exceeding a specific angle, the light transmissivity reaches the maximum. On the other hand, as the incident angle becomes larger in the positive direction, the light scatter increases, and around +50 degrees (L4), for example, scattering somewhat decreases, but almost all light is scattered. This characteristic is an extremely special optical characteristic, and by making use of this characteristic, the liquid crystal surface with improved brightness and visibility can be observed as compared with a case of using a conventional light scattering film in the front direction. The optical film of the invention can exhibit its characteristic in combination with, for example, a reflective polarizer, an isotropic scattering light diffusion film, or a light diffusion layer.

The optical film of the invention may be manufactured in any method. A preferred example is shown in Fig. 7. The optical film described in Fig. 7 is preferably formed such that a radiation sensitive material 22 comprising prepolymer or monomer is applied on a plastic film 21 and dried, and this radiation sensitive material is selectively irradiated with radiation of straight light through a desired photo mask 23 to induce selective polymerization of the material, and thereby columnar structures having a high refractive index are formed. At this time, by adjusting the angle at which the radiation is irradiated to the radiation sensitive material, the angle of the axial line of the columnar structure to the normal direction of the film can be adjusted. After irradiation, the prepolymer or monomer in the illuminated area and non-illuminated area may be polymerized by heating or another method, if necessary. Such radiation sensitive material includes commercially available radiation sensitive polymer films sold as OMNIDEX (registered trademark) HRF150 and HRF600 manufactured by DuPont Co. The radiation sensitive polymer film carries a radiation sensitive material layer on a polymer film, and a high refractive index columnar structure of graded index type can be formed by irradiation with radiation. If birefringence is present in the radiation sensitive material, coloring or other undesired phenomenon may occur, but if the birefringence is within a tolerable range, such birefringence may be present. The material for forming the optical film of the invention itself is preferably a highly light transmittable material.

The photo mask to be used when irradiating the radiation sensitive material may be manufactured in a method known hitherto as a method for manufacturing a photo mask. As the method for manufacturing a photo mask, for example, a photolithography method is known. Without using photo mask, meanwhile, high refractive index regions may be formed in the radiation sensitive material by scanning and exposing the radiation sensitive material directly by laser beam, X-ray, electron beam or the like. Alternatively, the optical film for use in the invention may be also formed by piercing a plastic film or the like directly by laser beam or another method, and filling the formed holes with a material having a higher refractive index than the plastic film.

Difference in refractive index between phases different in refractive index in the optical film of the invention may be generally set in a range of 0.005 to 0.2, and preferably 0.01 to 0.1. If the difference in refractive index is less than 0.005, it is not easy to obtain a sufficient light scattering characteristic. The difference of the refractive index may be either of step index type in which the refractive index changes suddenly at the interface between the higher refractive index region and another phase, or of graded index type in which the refractive index changes gradually. Whether the columnar structure is of step index type or graded index type may be properly selected depending on the required light scattering characteristic of the optical film.

The shape of the higher refractive index regions having the columnar structure in the optical film of the invention is usually a circular column. The diameter of the circle of the circular column is usually tens of nanometers to hundreds of microns, preferably 50 nm to 100 µm, and more preferably 100 nm to 50 µm, in view of the wavelength of light. The size of circles may be same or different. The configuration of columnar structures may be either regular or irregular. Considering possibility of occurrence of moire or the like, it is preferred to form circles in random sizes and random configurations. In the invention, the angle of the columnar structures is not always required to be parallel as far as in a range of 25 to less than 90 degrees, and it does not matter if structures different in angle or different in direction are present. However, the less uniform the angle or direction is, the more broadly the light is scattered on the whole, and the scattered light distribution varies moderately at all angles, and therefore axial lines of columnar structures are preferred to be parallel to each other. The density of the columnar structures may be set properly depending on the required degree of scattering.

The thickness of the optical film of the invention is not particularly specified, but is generally in a range of about 2 µm to about 100 µm. The optical film of the invention is a film having controlled scattering and transmitting characteristics, and may be preferably used, for example, as a light diffusion film or light diffusion sheet in a liquid crystal display device, especially a reflective type or transflective type liquid crystal display device.

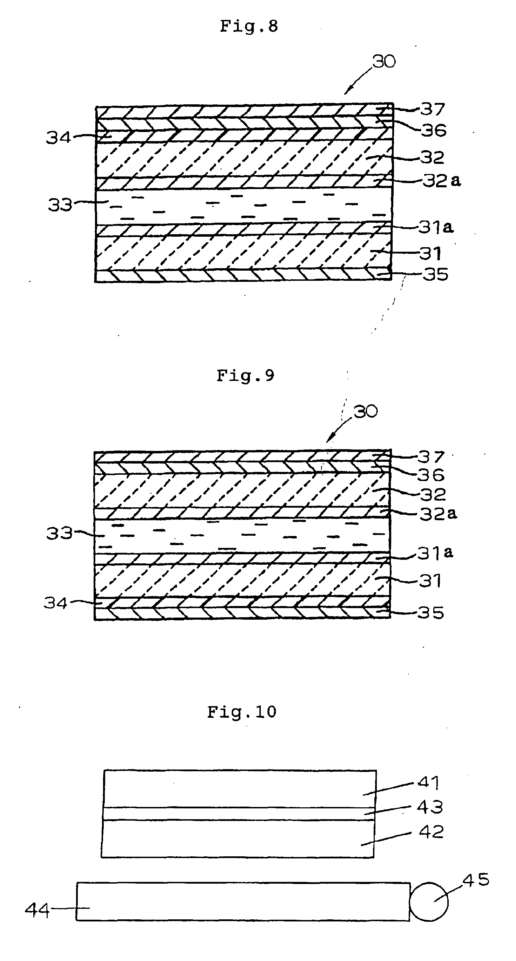

Fig. 8 and Fig. 9 show examples of configuration of the optical film of the invention used as a light diffusion film in a liquid crystal display device. In a liquid crystal display device 30, a liquid crystal layer 33 is disposed between glass substrates 31 and 32 having a pixel electrode 31a and a counter electrode 32a formed therein. A light diffusion film 34 is disposed on the glass substrate 32 at the light incidence side (Fig. 8), or on the surface of a reflective film 34 disposed beneath the glass substrate 31 at the light reflection side (Fig. 9). When a retardation plate 36 and a polarizer film 37 are used, they are generally disposed at the outside of the light diffusion film 34. In the liquid crystal display devices shown in Fig. 8 and Fig. 9, the light diffusion film 35 is disposed at only one side of the liquid crystal layer 33, but the light diffusion film may be also disposed at both sides of the liquid crystal layer 33. The configuration of the liquid crystal display device is not limited to the illustrated examples alone.

When light is irradiated from the back side of the liquid crystal layer by the back light, a light diffusion film layer is usually disposed between the back light and the liquid crystal layer, that is, at the incident light side. In the case of the liquid crystal display device of the back light type, by combining the optical film of the invention with a reflective polarizer, more preferable results will be obtained. Fig. 10 shows an example of combination of the optical film of the invention and a reflective polarizer in a liquid crystal display device of back light type.

To use a reflective polarizer in a liquid crystal display device for a cellular phone, personal digital assistant (PDA), etc. it is required to keep brightness in reflection. In the case of using a reflective polarizer, if attempted to raise the luminance in transmission in particular, the luminance in reflection is lowered. In a liquid crystal display device for a cellular phone, personal digital assistant, etc. what is desired is an optical film functioning as a light diffusion film capable of realizing a bright image excellent in visibility in both transmission and reflection state.

In Fig. 10, reference numeral 41 is a light diffusion film, 42 is a reflective polarizer, 43 is an acrylic adhesive, 44 is a light guide plate, and 45 is a light source. Usually, the glass substrate 31 of the liquid crystal display device in Fig. 9 is adhered on the light diffusion film 41. The light from the light guide plate 44 is focused by a BEF (light focusing sheet) (not shown), and is put into the reflective polarizer 42. As a result, only P wave of the incident light is allowed to pass and S wave is reflected by the reflective polarizer 42. Further, the P wave of the light reflected by the BEF and the like is passed and S wave is reflected. As this operation is repeated, the S wave is converted into P wave and the S wave that is not utilized hitherto can be utilized. That is, the S wave is usually cut off by the polarizer film provided in the liquid crystal display device, but by the use of the reflective polarizer, the S wave hitherto cut off by the polarizer film can be effectively utilized. The optical film of the invention is excellent in transmissivity in the front direction as shown in Fig. 4(a) as compared with that of the prior art, and also with respect to 0 degree - 180 degrees axis, the transmissivity is superior in the direction of the columnar structure and in the vertical direction. Therefore, the light is focused in these directions, and the quantity of light emitted in the front direction by passing through the polarizer film is dramatically increased as compared with the case of using a conventional light scattering film. The luminance is remarkably enhanced in the front direction, and a bright image display can be also realized in the front direction. In the invention, the BEF is not always required in the back light, and the light may not be always focused. If not illuminated by the back light, the reflective polarizer has a function as a reflective film. Thus, it can be sufficiently used as the reflective type liquid crystal display device although the performance may be slightly inferior as compared with the reflective film such as total reflective film.

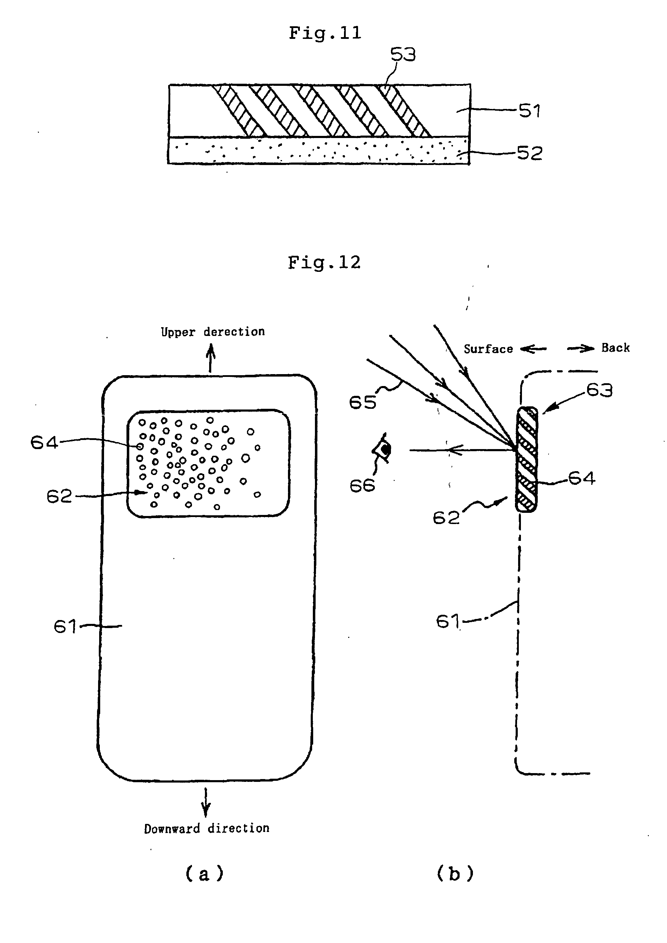

As shown in Fig. 11, moreover, by using the optical film of the invention as a light scattering film 51 and combining it with a conventional light diffusion film 52 of isotropic scattering type, a liquid crystal display device bright in the front direction and having a wide viewing angle is obtained. This isotropic scattering light diffusion film may be not a film form. For example, when adhering or gluing the optical film of the invention to a reflective film or glass substrate, the optical film is adhered or glued to the reflective film or glass substrate by using an adhesive or gluing agent containing, for example, spherical filler different in refractive index from the base polymer as an adhesive or gluing agent, and a light diffusion adhesive or gluing agent layer may be formed. By combining the light diffusion film or light diffusion layer of isotropic scattering type with the optical film of the invention, the peripheral light is broadly diffused by the light diffusion film of isotropic scattering type, and the light including this broadly diffused light is focused in the front direction by the optical film of the invention. As a result, the effect of the optical film of the invention and the effect of the conventional isotropic scattering film are combined, thereby forming a liquid crystal display device excellent in visibility when observing the liquid crystal screen from the front direction, capable of observing a bright image, and having a wide angle of visual field.

The state of controlled diffusing and transmitting characteristics in a liquid crystal display device using the optical film of the invention as a light diffusion film is explained by referring to a cellular phone 61 in Fig. 12. In the cellular phone 61, the optical film shown in Fig. 3 is used as a light diffusion film 63, and the light diffusion film 63 is placed in a liquid crystal display device of the cellular phone as shown in Fig. 12, such that the azimuth angle of 0 degree - 180 degrees axis of the optical film coincides with the vertical direction of the cellular phone, the film surface side end portion of columnar structures 64 points to an upper direction of a display screen 62 of the cellular phone 61, and the film bottom side end portion of columnar structures 64 points to a downward direction of the display screen. As Fig. 12 is exemplified to explain the function of the light diffusion film, the configuration about the liquid crystal display device is omitted. In such cellular phone, when a viewer 66 views the cellular phone 61, light 65 in a wide range of upper, right and left directions including behind the user enters the liquid crystal display device. At this time, the light entering from the upper, right and left directions is diffused by the light diffusion film. The light diffusion film 63 has a higher light transmissivity in the film front direction as compared with a conventional light diffusion film, for example, as shown in Fig. 4(a), and is excellent in the light transmissivity of the outgoing light from the front direction toward the positive direction of the azimuth angle of 0 degree - 180 degrees axis (in the downward direction in the diagram). Accordingly, the light entering peripherally and diffused is reflected, and is focused and emitted in the front direction and positive direction of 0 degree - 180 degrees axis of excellent transmissivity. The brightness is sufficient in the front direction, that is, the most commonly observed direction when viewing the display screen of the cellular phone and so on, and a display screen having favorable visibility can be observed from the same direction. That is, such scattering and reflecting characteristics improves the visibility and brightness of the image in the most widely viewed direction when observing the display screen of the cellular phone and so on. At this time, when elliptical columns are used instead of circular columns as columnar structures, and the major axis of ellipse is placed in the lateral direction of the display screen, the light focusing performance can be further enhanced in the front direction and in the downward direction of the 0 degree to 180 degrees axis.

The same characteristic is shown when the irradiating light enters the liquid crystal display device from the backlight, and therefore in both states of transmission and reflection, a bright and improved visible image is realized. Further, as mentioned above, when a reflective polarizer or isotropic scattering light diffusion film is used together with the light diffusion film of the invention, a brighter display will be obtained in the front direction as compared with a case of using a conventional light diffusion film, and display with wider angle of visual field is realized.

### Examples

The invention is further described by referring to examples, but the invention is not limited to these examples.

### Example 1

As a radiation sensitive polymer film composing columnar structures, a commercially available OMNIDEX (registered trademark) HRF150 manufactured by DuPont Co. was used, and a mask having circular hole patterns of 2 µm in average was adhered closely by a hard contact method on the surface of this OMNIDEX HRF150 radiation sensitive material. Light generated from a mercury lamp was passed through a lens to form into a parallel light, and this parallel light was irradiated through the mask from a direction inclined by 30 degrees from the normal direction of the radiation sensitive polymer film. At this time, the thickness of the radiation sensitive material of the radiation sensitive polymer film was about 50 µm, and after irradiation for 2 to 5 minutes, it was cured in 5 minutes at 100°C, so that an optical film having haze of 92 and total ray transmissivity of 97 was obtained.

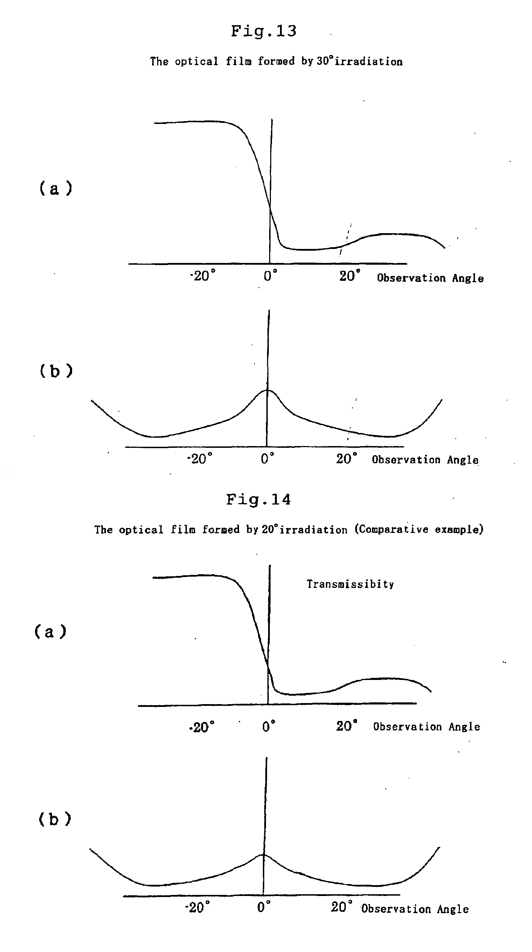

The angle dependence of straight light transmissivity of this optical film was measured. This measurement was carried out by a method as shown in Fig. 5. Obtained results are shown in Figs. 13(a) and 13(b). Fig. 13(a) is a diagram obtained by measuring the straight light transmissivity as the elevation angle was varied from 0 degree to 180 degrees with respect to an azimuth angle of 0 degree - 180 degrees axis (symmetric axis). Fig. 13(b) is a diagram obtained by measuring the straight light transmissivity as the elevation angle was varied from 0 degree to 180 degrees with respect to an azimuth angle of 90 degrees - 270 degrees axis (asymmetric axis).

### Comparative example

An optical film was obtained in the same manner as in the method of manufacturing an optical film in Example 1, except that the exposure angle to the radiation sensitive polymer film was changed from 30 degrees to 20 degrees. Straight light transmissivity of the obtained optical films was measured as same as in Example 1, and the elevation angle dependence of two axes was investigated. Results are shown in Figs. 14(a) and 14(b).

By comparison between Fig. 13 and Fig. 14, the front straight light transmissivity is known to be higher in the optical film of Example 1 as compared with that of the comparative example. In this case, the front straight light transmissivity is raised from 7% to 11% by changing the columnar structure inclination angle from 20 degrees (comparative example) to 30 degrees (Example 1).

### Example 2

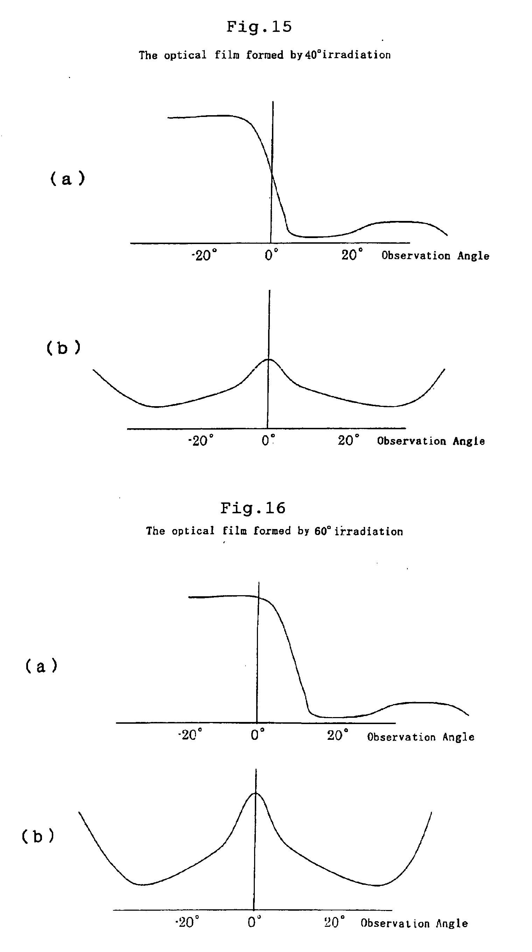

An optical film was formed in the same manner as in the method of manufacturing an optical film in Example 1, except that the exposure angle to the radiation sensitive polymer film was changed from 30 degrees to 40 degrees. As a result, an optical film having haze of 92 and total ray transmissivity of 97 was obtained. The angle dependence of straight light transmissivity of this optical film was measured as same as in Example 1. Results are shown in Figs. 15(a) and 15(b). Fig. 15(a) is a diagram obtained by measuring the straight light transmissivity as the elevation angle was varied from 0 degree to 180 degrees with respect to an azimuth angle of 0 degree - 180 degrees axis (symmetric axis). Fig. 15(b) is a diagram obtained by measuring the straight light transmissivity as the elevation angle was varied from 0 degree to 180 degrees with respect to an azimuth angle of 90 degrees - 270 degrees axis (asymmetric axis).

By comparison between Fig. 14 and Fig. 15, the front straight light transmissivity is known to be higher in the optical film of Example 2 as compared with that of the comparative example. In this case, the front straight light transmissivity is raised from 7% to 15% by changing the columnar structure inclination angle from 20 degrees (comparative example) to 40 degrees (Example 2).

### Example 3

An optical film was formed in the same manner as in the method of manufacturing an optical film in Example 1, except that the exposure angle to the radiation sensitive polymer film was changed from 30 degrees to 50 degrees. As a result, an optical film having haze of 92 and total ray transmissivity of 97 was obtained. The angle dependence of straight light transmissivity of this optical film was measured as same as in Example 1. Results are shown in Figs. 4(a) and 4(b). Fig. 4(a) is a diagram obtained by measuring the straight light transmissivity as the elevation angle was varied from 0 degree to 180 degrees with respect to an azimuth angle of 0 degree - 180 degrees axis (symmetric axis). Fig. 4(b) is a diagram obtained by measuring the straight light transmissivity as the elevation angle was varied from 0 degree to 180 degrees with respect to an azimuth angle of 90 degrees - 270 degrees axis (asymmetric axis).

By comparison between Fig. 4 and Fig. 14, the front straight light transmissivity is known to be higher in the optical film of Example 3 as compared with that of the comparative example. In this case, the front straight light transmissivity is raised from 7% to 18% by changing the columnar structure inclination angle from 20 degrees (comparative example) to 50 degrees (Example 2).

### Example 4

An optical film was formed in the same manner as in the forming method of optical film in Example 1, except that the exposure angle to the radiation sensitive polymer film was changed from 30 degrees to 60 degrees. As a result, an optical film having haze of 92 and total ray transmissivity of 97 was obtained. The angle dependence of straight light transmissivity of this optical film was measured as same as in Example 1. Results are shown in Figs. 16(a) and 16(b). Fig. 16(a) is a diagram obtained by measuring the straight light transmissivity as the elevation angle was varied from 0 degree to 180 degrees with respect to an azimuth angle of 0 degree - 180 degrees axis (symmetric axis). Fig. 16(b) is a diagram obtained by measuring the straight light transmissivity as the elevation angle was varied from 0 degree to 180 degrees with respect to an azimuth angle of 90 degrees - 270 degrees axis (asymmetric axis).

By comparison between Fig. 14 and Fig. 16, the front straight light transmissivity is known to be higher in the optical film of Example 4 as compared with that of the comparative example. In this case, the front straight light transmissivity is raised from 7% to 24% by changing the columnar structure inclination angle from 20 degrees (comparative example) to 60 degrees (Example 4).

### Effect of the Invention

As described herein, the optical film of the invention can transmit light efficiently in the vertical direction to the axial line of columnar structures of the azimuth angle of 0 degree - 180 degrees axis including the film normal direction (front direction). Therefore, it is possible to display the image sharply without lowering the luminance even in the front direction, and at the time of reflection, the peripheral light can be efficiently focused in the aforementioned direction including the front direction. Accordingly, by using the optical film of the invention as the light diffusion film of the liquid crystal display device in a cellular phone, personal digital assistant (PDA) or the like, and by disposing the favorable transmissivity direction of this optical film in the viewing direction of the cellular phone or the like including the front direction, a bright and improved visible image can be displayed in the viewing direction of the cellular phone or the like. Therefore, the optical film of the invention is an optimum optical film as a light diffusion film for a liquid crystal display device of reflective type and transflective type for use in a cellular phone, personal digital assistant or the like.

## Claims

1. An optical film with light-scattering and light-transmission characteristics which is composed of at least two phases different in refractive index, in which one phase greater in the refractive index has columnar structures extending in a thickness direction of the film, wherein each columnar structure is inclined at an angle of 25 degrees or more to less than 90 degrees with respect to the normal direction of the film.

2. The optical film according to claim 1, wherein each columnar structure is inclined at an angle of 30 degrees or more to 60 degrees or less with respect to the normal direction of the film.

3. The optical film according to claim 1 or 2, wherein axial lines of the columnar structures extending in the thickness direction of the optical film are parallel to each other.

4. The optical film according to any one of claims 1 to 3, wherein a difference in refractive index between at least two phases different in refractive indexes of the optical film is in a range of 0.005 to 0.2.

5. The optical film according to any one of claims 1 to 4, wherein the optical film is made of a radiation sensitive material.

6. A liquid crystal display device, wherein the optical film described in any one of claim 1 to 5 is disposed ahead or behind a liquid crystal layer.
